Europäisches Patentamt

European Patent Office

Office européen des brevets

(11) Publication number: **0 041 825**
**B1**

(12) **EUROPEAN PATENT SPECIFICATION**

(45) Date of publication of patent specification: **16.10.85**

(21) Application number: **81302459.3**

(22) Date of filing: **03.06.81**

(51) Int. Cl.⁴: **G 01 N 1/20, G 01 N 1/14**

(54) Apparatus and method for sampling viscous liquid during delivery to a ship.

<table>
<tr><td>(30) Priority: <b>06.06.80 NO 801702<br>08.05.81 GB 8114152</b></td><td>(73) Proprietor: <b>INTERPOWER A/S<br>2937 Begna (NO)</b><br>�84 <b>BE CH DE FR GB IT LI NL SE</b></td></tr>
<tr><td>(43) Date of publication of application:<br><b>16.12.81 Bulletin 81/50</b></td><td>(73) Proprietor: <b>ROBERT JENKINS & CO. LIMITED<br>Wortley Road<br>Rotherham Yorks S61, 1LT (GB)</b><br>�84 <b>GB</b></td></tr>
<tr><td>(45) Publication of the grant of the patent:<br><b>16.10.85 Bulletin 85/42</b></td><td>(72) Inventor: <b>Thomte, Per Magnus<br>Grottenveien 3D<br>Oslo 11 (NO)</b><br>Inventor: <b>Brooks, Peter<br>1 Vineyard Close<br>Tickhill Doncaster South Yorkshire (GB)</b></td></tr>
<tr><td>(84) Designated Contracting States:<br><b>BE CH DE FR GB IT LI NL SE</b></td><td></td></tr>
<tr><td>(56) References cited:<br><b>US-A-3 090 323<br>US-A-3 184 973<br>US-A-3 949 613<br>US-A-3 986 402<br>US-A-4 009 617</b><br><br><b>"The New Encyclopedia Britannica" Vol. 15, 15th Edition, 1977<br>"Encyclopedia of Science and Technology" Mac Graw-Hill Book Company, vol. 14, 1977</b></td><td>(74) Representative: <b>Ford, Michael Frederick et al<br>MEWBURN ELLIS & CO. 2/3 Cursitor Street<br>London EC4A 1BQ (GB)</b></td></tr>
</table>

Courier Press, Leamington Spa, England.

## Description

This invention relates to apparatus and a method for the sampling of viscous liquid which is being delivered through a pipe to at least one receiving container on board a ship. The use of the invention which is particularly envisaged is in sampling heavy fuel oil which is being supplied to a ship as bunker fuel for the ship's engine(s). The invention might also be used for sampling lubricating oil or crude oil.

Heavy fuel oil is a very viscous material, and because of this it is customarily supplied through heated hoses at a temperature of 55°C and a pressure of about 8 bar.

With rising crude oil prices the quality of heavy fuel oil has rapidly deteriorated. An inadequate quality of fuel oil can lead to excessive engine wear and/or breakdown. For instance an excessive content of high boiling materials creates incomplete combustion resulting in deposits which will tend to clog piston ring clearances. Another effect is ignition delays resulting in higher oil film stresses. Catalytic fines, originating from catalytic cracking processes can sometimes be found in heavy fuel oil and are an abrasive contaminant which can lead to engine breakdowns.

The damage resulting from bad quality fuel may well be difficult to attribute to the supplier of that fuel, because of the difficulty in proving when and where the fuel in question was taken on board. Prior to this invention it was not unusual to take samples of bunker fuel for analysis but such samples were usually taken only at the beginning and/or the end of the bunkering operation. It is possible for such samples to give a satisfactory analysis even though a substantial quantity of contaminants have in fact been included in the oil supplied, because the quality of that oil has varied during the course of the bunkering operation. For instance, water may be pumped on board during a relatively short part of the bunkering operation, perhaps as the supplier empties a tank.

US—A—3090323 shows an apparatus with a sampling pump — apparently a positive displacement pump — for repeatedly taking samples of constant volumes out of a pipeline. No specific application is indicated but the use of a sampling pipe welded in place suggests a fairly permanent installation, while the use of fairly small orifices indicates that the apparatus is probably intended for a reasonably mobile liquid.

US—A—3,986,402 shows an apparatus for sampling a body of liquid. The nature of this body of liquid and its container are not stated. Liquid is continuously pumped out and the flow of pump out liquid is periodically diverted into one or several sample containers for an interval of time. Thus the sample volumes would vary if the volume changed. The apparatus is shown as consisting of plural parts connected by wires, and operating rod, and exposed piping.

US—A—4009617 shows apparatus for sampling milk from a pipeline of a dairy plant, into a detachable container. Of course a dairy plant and a bunkering ship are very different places with little or nothing in common, while the viscosities of the fluids are quite different. The apparatus is shown as detachable from the milk pipeline, but there is no indication of when or why it would be detached. On the contrary there is provision for cleaning in situ.

According to one aspect of this invention, there is provided a method of sampling viscous liquid during delivery through a pipe from a supply to at least one receiving container on board a ship, the method comprising releasably attaching portable unit to the pipe, by means of the portable unit pumping small quantities of definite volume out of the flow through the pipe over the course of delivery, and accumulating these as a sample in at least one collecting receptacle attached to the portable unit while delivery proceeds.

The use of portable apparatus is advantageous in that it can be removed when not in use, for storage under cover and also for cleaning and drying in the ship's engine room. The small quantities may be extracted from the flow at regular intervals under the command of a delay timer. Preferably such a delay timer is made adjustable so that the same total volume of sample can be collected from bunkering operations of various durations. As an alternative to timed intervals it would be possible to govern the rate at which small quantities were removed in proportion to the rate of flow which was being delivered. It is considered, however, that this would lead to an undesirable degree of complexity and high cost of manufacture of the apparatus, and the use of regular time intervals is preferred.

Preferably, the flow through the pipe is mixed and the small quantities are extracted from just downstream of the mixing operation. This enables a very representative sample to be obtained.

It may very well be desired to obtain three samples so that one sample can be sent for analysis, one retained by the customer and one retained by the supplier. This can be done simply by accumulating a single sample of appropriate size and subsequently splitting this into three parts. In a preferred form of this invention, however, the small quantities which are moved from the liquid flow are distributed between a plurality of separate sample flow paths, and the quantities distributed to each path are accommodated separately, to provide a like plurality of samples, while delivery proceeds. In this way there are obtained a set of samples each representative of the oil or other liquid which has been delivered.

In a second aspect, the invention provides portable apparatus for sampling viscous liquid during delivery through a pipe from a supply to at least one receiving container on board a ship. The apparatus comprises a portable structure provided with at least one positive displacement pump, an inlet duct communicating with the inlet of the pump, at least one connector for attaching a sample collecting receptacle and connected to the outlet of the pump or pumps, and means for driving the pump or pumps. The apparatus is arranged so that over the course of delivery, with a collecting receptacle attached to the or each said connector, the pump or pumps operate to extract small quantities of definite volume out of the flow through the pipe and to supply them to the collecting receptacle or receptacles to accumulate therein while delivery proceeds. The or each pump, the inlet duct, the or each connector for attaching a sample receptacle, and the means for driving the pump or pumps, are all assembled to the portable structure, such that said apparatus is a portable unit. This is connectable to the said pipe with the inlet duct connected to the interior of the pipe for sampling, and is disconnectable from the pipe for storage of the portable unit.

The advantage of portability has already been mentioned. Use of a positive displacement pump is also advantageous. Such a pump has an operating cycle in which a definite volume is pumped, and so will have a constant delivery rate even if there are large variations in viscosity. Since the flow rate through the pipe during bunkering is more or less constant the apparatus will consume a proportional part of the quantity loaded and provide a representative sample of the total fuel volume bunkered.

In a preferred form the apparatus has a plurality of connectors for separate collecting receptacles and is arranged so that in use the pump or pumps deliver withdrawn liquid to each connector, so that quantities of withdrawn liquid accumulate in each, as delivery proceeds. Thus a set of samples, each representative of the fuel delivered is obtained.

Preferably flow in the separate paths is simultaneous, although it might well be satisfactory to have a plurality of small quantities withdrawn, one for each collecting receptacle, in quick succession, with an interval before the same plurality is again withdrawn. To achieve simultaneous flows there is preferably a plurality of pumps, of the positive displacement type, with their inlets connected to one or more inlet ducts and with the outlet of each pump connected to a respective connecter for a collecting receptacle, the apparatus having a common drive for all the pumps so that they are constrained to operate in unison.

It is convenient if a single flow of liquid is withdrawn along a sampling pipe leading to a branch point at which it is split into a plurality of subsidiary flows. It would, however, be possible to withdraw liquid directly into a plurality of tubes opening into the flow at about the same place. In any case the flow paths from the sampling point to each receptacle are preferably all substantially equal in volume.

The apparatus preferably includes a pipe section through which the flow to be sampled is passed, which includes within it a static vane mixer to mix the liquid as it flows through the pipe, and which has an opening through which a sampling tube connected to the pump inlet or pump inlets communicates with the interior of the pipe section downstream of the mixer.

Preferably such a pipe section is more or less permanently incorporated into fixed pipework through which delivery is effected, and the opening is a lateral access port which can be closed when not required. The remainder of the apparatus can be constructed as a portable unit mountable on the pipe section at the said access port, and including a sampling tube which projects into the pipe section through the access port when the unit is mounted on the pipe section.

A ship would be provided with one such pipe section at each of its bunkering points, more or less permanently fitted into the bunkering pipework close to and preferably inboard of, the existing flange for attachment of a supply hose. The access ports would preferably be arranged to face upwardly, and when bunkering the portable unit would be fitted over the access port of the said pipe section at the bunkering point in use.

It is preferred to accumulate the sample or set of samples over the whole of a bunkering or other delivery period in order not to have to mix the contents of more than one sample receiver in order to get a representative sample. If the bunker fuel which is supplied is loaded into a plurality of separate tanks in a vessel, and these are loaded in succession, it is desirable to take a sample or set of samples for each separate tank. Then if the quality of the bunker fuel varies so that one tank is loaded with a poorer quality than the others, this tank can be isolated when the analysis results are received, whereas the contents of the other tanks will be known to be satisfactory and can be used without risk.

While the invention is particularly envisaged in connection with bunker fuel, it could also be employed for sampling the lubricating oil for the ship's main engine. The main engine of a large ship requires several tons of lubricating oil which therefore represents a considerable value and can give rise to substantial engine damage if it is of bad quality or to the wrong specification. The invention can also be employed for sampling the cargo of crude oil taken onto a tanker in order to have samples which can be used for deciding any disputes regarding the quality of the cargo prior to delivery.

An embodiment of this invention will now be described, by way of example only, with reference to the accompanying drawings in which:—

Figure 1 shows a spool piece and portable unit attached thereto embodying this invention and incorporated in fixed pipe-work;

Figure 2 shows a retaining ring for the static vane mixer;

Figure 3 is a section through the unit on line III—III of Figure 4, omitting most pneumatic components and showing the pumps in end elevation;

Figure 4 is a section on the line IV—IV of Figure 3, partly cut away and with most pneumatic components again being omitted;

Figure 5 is a vertical section through the distribution block on line V—V of Figure 6;

Figure 6 is a section on line VI—VI of Figure 5;

Figure 7 is an end view of the unit and collecting bottles seen in the direction of arrow VII of Figure 4;

Figure 8 is a section through a connector for a bottle;

Figure 9 is a diagram showing the pneumatic circuit.

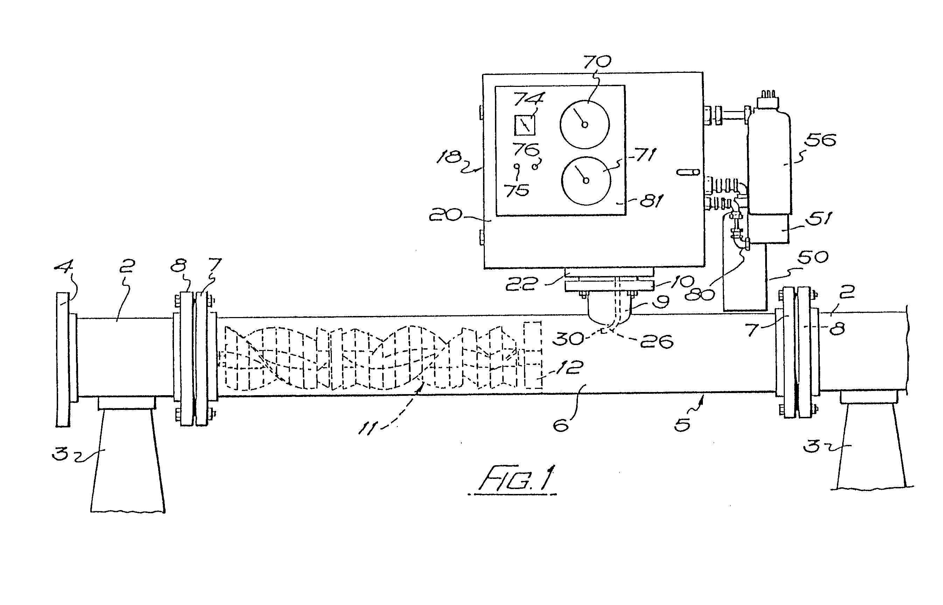

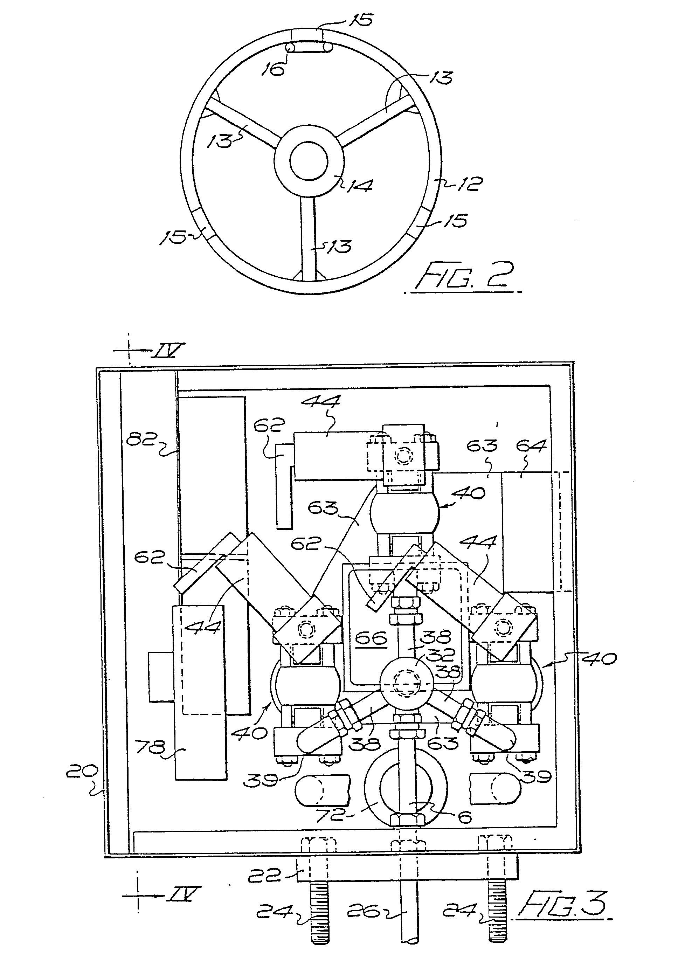

Reference will first be made to Figures 1 and 2 of the drawings. A ship typically is provided with a plurality of bunker points, such as one in a forward position at each side of the vessel and one in an afterward position at each side. At each bunker point there is fixed pipework 2 supported on substantial cradles 3 and terminating in an end flange 4 some two metres from the ship's side, and to which a supply hose from a jetty or bunkering barge can be attached.

For the sampling of bunker oil as it is delivered onto the ship, a spool piece as shown by Figure 1 is permanently inserted at each bunker point in place of an equivalent length of the existing pipework, slightly inboard of the flange to which the supply hose can be attached.

The spool piece 5 shown in Figure 1 consists of a pipe section 6 provided at each end with mounting flanges 7 by which it is bolted to flanges 8 welded to the pipework 2 at either side. It has a radial access port 9 terminating in a mounting flange 10. The spool piece is mounted so that the access port 9 faces upwardly.

Within the pipe section a static vane mixer 11 is fitted. This is an assembly of fixed blades which cause turbulence in the oil as it flows past them and so mixes the oil by causing different parts of the flow to shear against each other. The purpose of this mixer is to give uniformity of composition across the whole cross section of flow at the region 12 immediately downstream of the mixer. It is from here that samples are taken.

Static vane mixers are known pieces of equipment and a suitable mixer is available from Lightnin Mixers Limited, Stockport, England, under their brand name "Inliner".

The static vane mixer 11 is a fairly close fit in the pipe section 6 and it is retained against the thrust applied to it by the oil flow by means of an assembly as illustrated in Figure 2. This consists of a ring 12 whose outer diameter matches the internal diameter of the pipe section 6, three radial vanes 13 carried by this ring and supporting a central hub 14. The positioning ring is fixed in place in the spool piece. The static vane mixer 11 has a central shaft whose downstream end is received in the hub 14. The downstream vanes of the mixer engage slots 15 in the upstream face of the ring 12 and one of these vanes is secured to a U bolt 16 welded to the ring 12; in this way rotation of the mixer 11 is prevented.

When a bunkering point is not in use its opening 9 will be closed off by a blank plate (not shown) bolted to its flange 10. Before bunkering is commenced the portable sample unit 18 illustrated by Figure 1 is fitted to the spool piece 5 at whichever bunker point is to be used. The unit 18 has a generally cuboidal cabinet with a circular plate 22 and mounting bolts 24 rigidly attached to its underside. Its front face is a door 20 giving access to the cabinet interior. After the blank plate has been removed from the flange 10 of the appropriate spool piece 5, the portable unit 18 is fitted onto the flange to take the position shown in Figure 1. The bolts 24 of the unit allow it to be secured to the bolt holes in the flange 10.

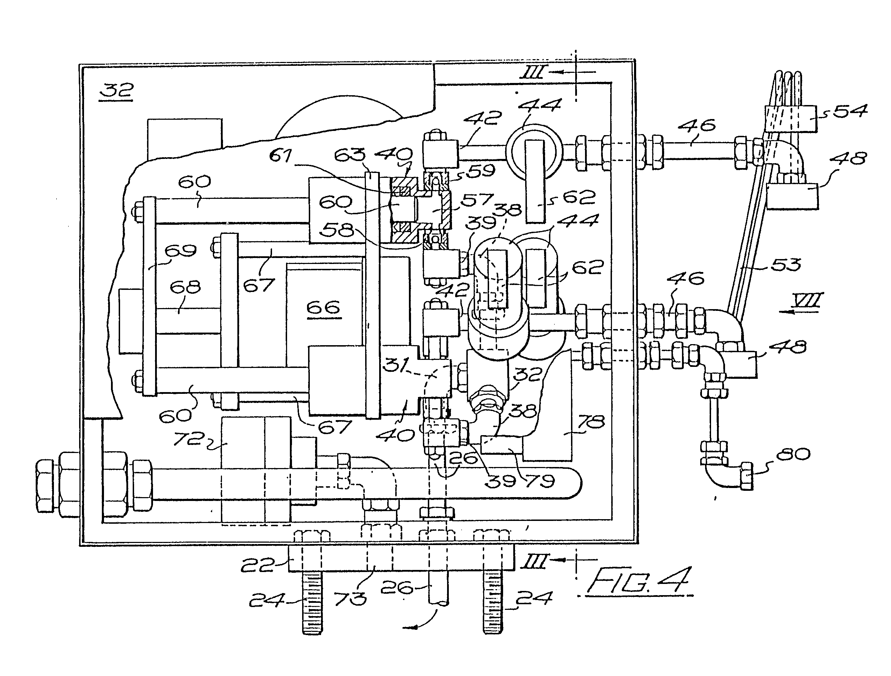

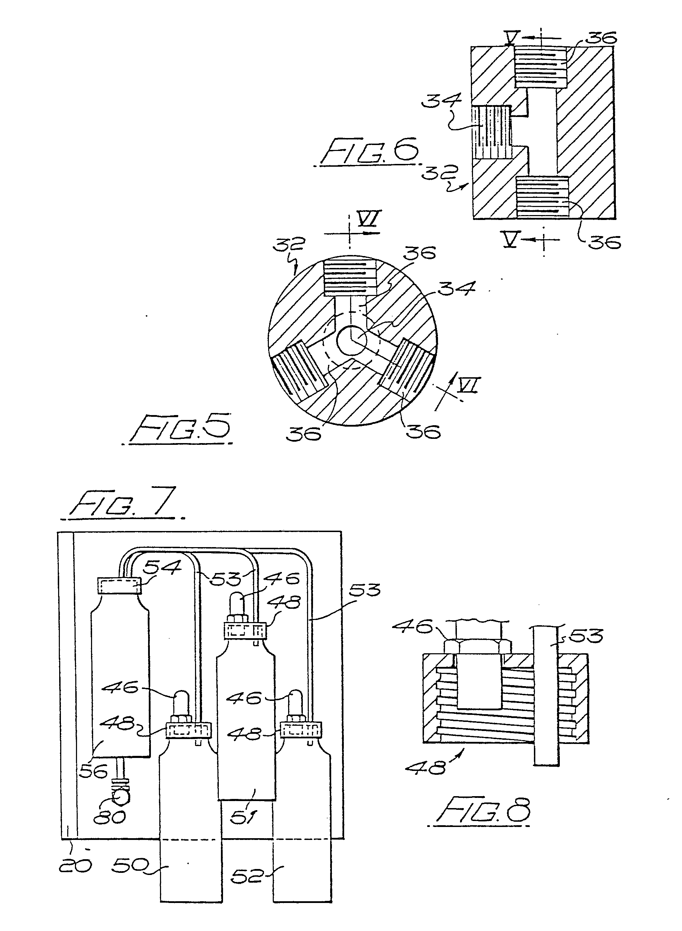

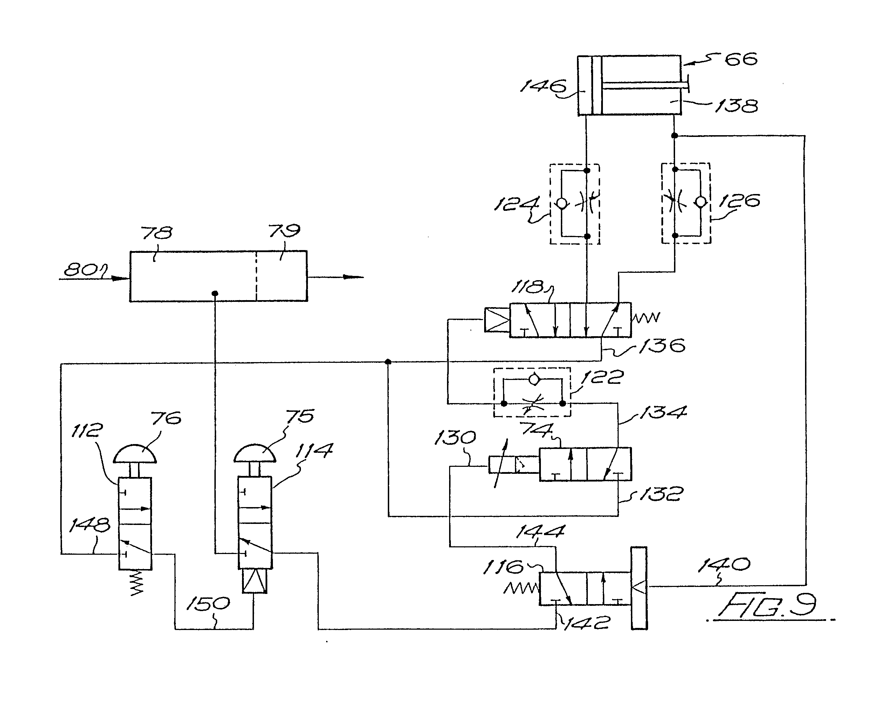

Turning now to Figure 3 onwards of the drawings, the portable unit 18 has a sampling tube 26 projecting from its underside. This tube 26 is led sealingly through the plate 22 and has a curved bottom end portion so that its open end 30 is exposed to the oncoming flow of oil downstream of the mixer. The sampling tube 26 leads upwards to an elbow 31 connecting it to a cylindrical distribution block 32 which has a central inlet 34 communicating with three radial outlet passages 36 (Figures 5 and 6). Respective pipes 38 lead from the passages 36 to the inlets 39 of three positive displacement pumps 40. The outlets 42 of these positive displacement pumps are connected to pressure retaining valves 44 (shown in phantom). These in turn are connected by pipes 46, which lead through the end face of the cabinet 20, to respective screw connectors 48 into which the necks of three collecting bottles 50, 51, 52 (see Figure 7) can be screwed. Each of the fittings 48 also has a tube 53 which leads vented air, or overflowing oil when the bottle is full, to a fourth connector 54 onto which a fourth bottle 56 is screwed to receive any overflow. The connector 54 has a hole venting to atmosphere. The positions of the bottles relative to the spool piece 5 are indicated in Figure 1. Although not so shown, the overflow bottle 56 could be made somewhat larger than the other three bottles.

One pump 40 is shown partially sectioned in Figure 4. Its body defines a working chamber 57 separated from the inlet through non return valves 58, 59. A piston 60, sliding through seals 61, enters the chamber 57. When the piston is urged to the left, as seen in Figure 4, oil is drawn in through valve 58. When the piston moves to the right the oil is expelled through valve 59 to the outlet 42.

The pressure retaining valves 44 are provided because the bunker oil is delivered under a pressure of 8—10 bar, and if the pumps 40 delivered only against atmospheric pressure their volumetric characteristics could be affected so that they did not deliver the proper amount. The valves 44 are set to provide a back pressure of 10 bar, to ensure that the pumps 40 deliver against a higher pressure (i.e. they are actually pumping). Each valve 44 has an operating handle 62 for removing the back pressure while the system is initially primed. Suitable pumps 40 and pressure retainers 44 are available from Wallace and Tier- nan Limited, Tonbridge, England under their part numbers 33606A and 33668D.

The pumps 40 are mounted on a plate 63 welded to a bracket 64 attached to the rear of the cabinet.

The pistons 60 of the pumps 40 could each be driven by a separate pneumatic cylinder. However, to ensure that all three pumps operate to an identical extent, the three pistons 60 of the pumps are driven by a single cylinder 66. The cylinder 66 is attached to the plate 63 by bolts 67 (not shown in Figure 3) so as to be fixed in relation to them, and disposed between them. The piston 68 of the cylinder 66 is attached to a plate 69 to which the pistons 60 are all attached. Operation of the cylinder 66 thus moves all three pistons 60 simultaneously and to an equal extent causing identical operation of all three pumps 40.

The portable unit 18 (see Figure 1) is provided with a thermometer 70 to indicate the temperature in the cabinet, a pressure gauge 71 to indicate the pressure of the bunker oil in the spool piece, and controls for the operation of the pneumatic cylinder 66. The pressure gauge 71 is connected by a capillary (not shown) filled with silicone oil to a diaphragm seal unit 72 which is connected to a second hole 73 through the plate 22 and thus is exposed to the pressure within the spool piece 5.

The operation of the cylinder 66 is governed by a pneumatic control system. This employs a pneumatic delay timer 74 which causes operation of the cylinder 66 and hence the pumps 40 each time it is required to withdraw a small quantity of oil from the flow through the spool piece 5. Start and stop buttons 75, 76 are provided, governing the supply of air to the timer 74. The pneumatic equipment, including a combined filter and pressure regulator 78 and a lubricator 79 for the incoming air, is mounted just inside the front face of the cabinet 20. An inlet 80 is provided on the cabinet for connection to the ship's supply of compressed air. The timer 74, the start and stop buttons 75, 76 and the gauges 70, 71 are visible through a window 81 in the door at the front of the cabinet. These, and many pneumatic components (not shown) are mounted on a plate 82 on the inside of the cabinet 18.

The pneumatic circuit is shown diagrammatically in Figure 9. The air inlet 80 is connected to a filter and pressure regulator which is connected through a lubricator to various valves. The pneumatic circuit employs a push button operated spring returned valve 112, a push button operated pneumatically returned valve 114, a spring returned poppet valve 116, a pneumatically operated spring returned spool valve 118, the pneumatic delay timer 74 and three flow control valves 122, 124 and 126 each of which comprises a non return valve permitting free flow in one direction and an adjustable restricted bypass permitting return flow past the non return valve, but restricting the rate of such return flow. All of these parts are conventional components.

The pneumatic timer is driven by a supply of air entering it at 130 and, driven by this air, the valve which is incorporated in it periodically moves over against its return spring so as to connect port 132 to line 134. It remains there until port 130 is vented. The timer is adjustable by means of an operating knob to vary the delay before its valve moves over against the return spring. Suitable pneumatic timers are made by H. Kuhnke Ltd., Penn, Bucks, England.

The circuit functions as follows:

Once the ships air supply has been connected to the inlet 80, the apparatus assumes its normal rest state. Air admitted at port 136 of valve 118 passes through flow control valve 126 to pressurise chamber 138 of the main pneumatic cylinder and also, via line 140 to maintain the poppet valve 116 pushed over against its return spring so that its inlet port 142 is connected to line 144 leading to port 130 of the timer.

The apparatus will remain static in this condition indefinitely until the start button 75, which is the operating button of valve 114, is pressed, to connect a supply of air from the regulator to port 142 of valve 116 and thence via line 144 to the pneumatic timer. After the interval determined by the timer has elapsed the valve in the timer changes over and air from port 132 is admitted via line 134 to operate spool valve 118. Valve 118 functions as the pneumatic equivalent of an electrical relay. When operated it disconnects the supply of air entering its port 136 from the chamber 138 of the cylinder and instead connects it via flow control 124 to chamber 146 of the cylinder. The chamber 146 is thus pressurised, so driving the piston of the cylinder through its operating stroke. Air from the chamber 138 exhausts through the flow control 126, which is set to allow a high rate of flow. As the chamber 138 vents so also does the operating cylinder of the poppet valve 116 until it is returned by its spring, so cutting off the supply of air to the inlet 130 of the timer and instead venting via line 144. This enables the return spring in the timer to restore the position of the valve in it, thus resetting the timer.

The supply of air to drive over the spool valve against its return spring has now been cut off and the return spring thus returns the valve, but this action is rather slow, however, because the flow control 122 is set to permit only a low rate of flow. Thus return of the valve 118 is delayed sufficiently long for the stroke of the piston in the main operating cylinder to be completed and allow the timer to be fully reset. When the valve 118 is returned by its spring, chamber 138 is again pressurised to return the piston, and air is also admitted to line 140 to operate the poppet valve 116.

Thus the rest condition of the circuit has been restored and air is again being supplied to the inlet 130 of the timer, so that a further interval is being timed. The circuit will continue to move at regular intervals in this way, until such time as it is stopped by depressing the stop button 76 which operates valve 112 against its return spring

to admit air from port 148 via line 150 to return the start valve 114 and so cut off the supply of air to inlet 130 of the timer.

Suitable controlled flows through the valves 122, 124 and 126, by passing their non return valves, are 3 c.f.h., 14 c.f.h., and 65 c.f.h. respectively, all at 3.5 bar. The pneumatic circuit would then require a minimum air supply of 20 c.f.h. at 3.5 bar.

Use of the portable unit 18 is as follows. As already explained, the unit would be fitted onto the flange 10 at the bunkering point which was to be used, before bunkering begins. When flow starts the pressure shown on the gauge will rise to some 8 or 10 bar. The operating handles 62 of the pressure retaining valves 44 are then opened to prime the pumps 40. The handles 62 are kept open — and the pumps 40 operated if necessary — until oil appears at each of the connectors 48. They are then turned back so that the pumps thereafter deliver against pressure imposed by the retaining valves 44.

The pipes 46 may be transparent, in which case it will only be necessary to keep the handles 62 open until oil is seen in these pipes. When the pumps 40 have been primed, collecting bottles 50, 51, 52 and 56 are screwed onto their respective fittings 48, 54 and the pneumatic timer set so as to cause the withdrawal of oil at the intervals required.

The quantity of oil which is withdrawn each time is determined by the capacity which each pump 40 delivers in one operating cycle. The sampling interval is chosen, taking the pump capacity into account, so that the collecting bottles will just be filled during the expected length of the bunkering period. For example if the pumps each displace 12 ml in one operation, the ship is expected to bunker for four hours and it is desired to collect one litre in each of the three sample bottles, then the pneumatic timer will be set so that the sampling operation takes place every 2.9 minutes.

When bunkering is completed the portable unit is turned off and the three sample containers 50, 51, 52 are removed, fitted with screw caps, and labelled. One would then be handed to a representative of the oil supplier, one would be retained by the ship or other representative of the ship's owners, and the third sent for analysis.

It is desirable with heavy fuel oil that the portable unit 18 should be cleaned out by steam cleaning after use. The ability to remove it from the spool piece enables this to be done in the ship's engine room where it will readily be possible to blow steam through it, followed by dry air. It will also be possible to store it under cover.

Because heavy fuel oil is very viscous at room temperature it is customarily supplied to a ship through heated hoses and at some 55°C. It may therefore be necessary to provide heating within the portable unit 18 if bunkering is taking place at a cold ambient temperature. To enable this a U-tube through which steam can be passed may be provided as indicated at 84. Also, as shown the cabinet is of a double skinned construction with insulation (not shown) between the skins. The door 20 is not shown double skinned, but could be given a double skinned construction if desired. The double skinned construction assists in maintaining the cabinet interior at a temperature at which the oil will flow, even under cold environmental conditions.

## Claims

1. Portable apparatus for sampling viscous liquid during delivery through a pipe (2, 6) from a supply to at least one receiving container on board a ship, the said apparatus comprising a portable structure provided with at least one positive displacement pump (40), an inlet duct (26) communicating with the inlet of the pump, at least one connector (48) for attaching a sample collecting receptacle (56) and connected to the outlet of the pump or pumps (40) and means (66) for driving the pump or pumps:

the apparatus being arranged so that over the course of delivery, with a collecting receptacle (56) attached to the or each said connector (48) the pump or pumps (40) operate to extract small quantities of definite volume out of the flow through the pipe (2, 6) and to supply them to the collecting receptacle or receptacles (56) to accumulate therein while delivery proceeds;

the or each pump (40) the inlet duct (26) the or each connector (48) for attaching a sample receptacle (56) and the means (66) for driving the pump or pumps, all being assembled to the portable structure, such that said apparatus is a portable unit (18) which is connectable to the said pipe with the inlet duct (26) connected to the interior of the pipe (2, 6) for sampling, and which is disconnectable from the pipe for storage of the portable unit (18).

2. Apparatus according to claim 1 including a delay timer (74) to operate said drive means (66) at regular intervals, said timer being assembled to the portable unit (18), and adjustable to vary the duration of said intervals.

3. Apparatus according to any one of the preceding claims, wherein the portable unit (18) includes a casing (20) enclosing at least the said pump or pumps (40) and the means (66) for driving them, with manually operable controls (74, 75, 76) provided on the casing (20).

4. Apparatus according to any one of the preceding claims having a plurality of connectors (48) each for attaching a separate collecting receptacle (56) and the arrangement being such that, in use, the pump or pumps (40) deliver withdrawn liquid to each of the connectors (48) so that quantities of withdrawn liquid accumulate in each collecting receptacle (56) while delivery proceeds.

5. Apparatus according to claim 4 having a plurality of the said positive displacement pumps (40) with their inlets (39) connected to one or more said inlet ducts (26) and with the outlet (42) of each pump (40) connected to a respective said connector (48) the apparatus having a single drive means (66) operatively connected to all of the said pumps (40) whereby they are constrained to operate in unison.

6. In combination, portable apparatus according to any one of the preceding claims, and a pipe section (6) for incorporation in the said pipe (2) with a static vane mixer (11) in the pipe section (6) to mix liquid flowing therethrough, and an opening (9) in the pipe section (6) downstream of the vane mixer (11), for connection of the said inlet duct (26) to the interior of the pipe section (6).

7. The combination of claim 6 having a plurality of the said pipe sections (6) each incorporated into pipework of a ship, and the said portable unit (18) being connectable to any one of the pipe sections (6).

8. A method of sampling viscous liquid during delivery through a pipe (2, 6) from a supply to at least one receiving container on board a ship, the method comprising releasably attaching a portable unit (18) to the pipe, by means of the portable unit (18) pumping small quantities of definite volume out of the flow through the pipe (2, 6) over the course of delivery, and accumulating these as a sample in at least one collecting receptacle (56) attached to the portable unit (18) while delivery proceeds.

9. A method according to claim 8 further comprising the step of mixing the flow as it passes through the pipe, the said small quantities being extracted downstream of the mixing.

10. A method according to claim 8 or claim 9 wherein the small quantities extracted from the flow are distributed between a plurality of separate sample flow paths, and the quantities distributed to each path are accumulated separately, to provide a like plurality of samples, while delivery proceeds.

**Patentansprüche**

1. Tragbare Vorrichtung zur Entnahme von Proben einer viskosen Flüssigkeit während der Verladung dieser Flüssigkeit durch ein Rohr (2, 6) von einem Vorrat in mindestens einen Aufnahmebehälter an Bord eines Schiffes, bestehend aus einer tragbaren Konstruktion, die mit mindestens einer Verdrängerpumpe (40) versehen ist, einem Einlaßkanal (26), der mit dem Einlaß der Pumpe in Verbindung steht, mindestens einem Anschlußstück (48), das mit dem Auslaß der Pumpe oder der Pumpen (40) verbunden ist, zum Befestigen eines Behälters (56) zum Sammeln der Proben, und einer Einrichtung (66) zum Antrieben der Pumpe oder der Pumpen, wobei die Vorrichtung so ausgebildet ist, daß im Laufe der Verladung, wobei ein Sammelbehälter (56) an dem Verbindungsstück oder an jedem Verbindungsstück (48) befestigt ist, die Pumpe oder die Pumpen (40) arbeiten, um kleine Mengen von bestimmtem Volumen aus der Strömung durch das Rohr (2, 6) zu entnehmen und dem Sammelbehälter oder den Sammelbehältern (56) zuzuführen, um sie darin zu sammeln, während der Verladevorgang fortschreitet,

wobei die Pumpe oder jede Pumpe (40), der Einlaßkanal (26), das Verbindungsstück oder jedes Verbindungsstück (48) zum Befestigen eines Probensammelbehälters (56) und die Einrichtung (66) zum Antreiben der Pumpe oder der Pumpen in der tragbaren Konstruktion zusammengefaßt sind, so daß die Vorrichtung eine tragbare Einheit (18) ist, die mit dem Rohr verbindbar ist, wobei der Einlaßkanal (26) zur Entnahme von Proben mit dem Inneren des Rohres (2, 6) verbunden ist, und die zur Aufbewahrung der tragbaren Einheit (18) von dem Rohr trennbar ist.

2. Vorrichtung nach Anspruch 1 mit einem Zeitschaltglied (74) zum Betätigen der Antriebseinrichtung (66) in regelmäßigen Abständen, wobei das Zeitschaltglied mit der tragbaren Einheit (18) zusammengefügt und einstellbar ist, um die Dauer der Abstände zu verändern.

3. Vorrichtung nach einem der vorhergehenden Ansprüche, wobei die tragbare Einheit (18) ein Gehäuse (20) umfaßt, das zumindest die Pumpe oder die Pumpen (40) und die diesen zugeordneten Antriebseinrichtungen (66) umschließt, wobei manuell einstellbare Steuereinrichtungen (74, 75, 76) auf dem Gehäuse (20) angeordnet sind.

4. Vorrichtung nach einem der vorhergehenden Ansprüche mit mehreren Anschlußstücken (48), die jeweils zum Anschluß eines getrennten Sammelbehälters (56) dienen, wobei die Anordnung derart ist, daß im Gebrauch die Pumpe oder die Pumpen (40) die abgezweigte Flüssigkeit jedem der Anschlußstücke (48) zuführen, so daß sich die Mengen der abgezweigten Flüssigkeit in jedem Sammelbehälter (56) ansammeln, während der Verladevorgang fortschreitet.

5. Vorrichtung nach Anspruch 4 mit mehreren Verdrängerpumpen (40), deren Einlässe (39) mit einem oder mit mehreren Einlaßkanälen (26) verbunden sind und deren Auslaß (42) jeweils mit einem zugeordneten Anschlußstück (48) verbunden ist, wobei die Vorrichtung eine einzige Antriebseinrichtung (66) aufweist, die mit allen Pumpen (40) gekuppelt ist, so daß diese zwangsweise gemeinsam arbeiten.

6. Kombination einer tragbaren Vorrichtung nach einem der vorhergehenden Ansprüche mit einem Rohrabschnitt (6) zur Einfügung in das Rohr (2), wobei in dem Rohrabschnitt (6) ein statischer Flügelradmischer (11) angeordnet ist, um die hindurchströmende Flüssigkeit zu vermischen, und wobei in dem Rohrabschnitt (6) stromabwärts von dem Flügelradmischer (11) eine Öffnung (9) angeordnet ist, um den Einlaßkanal (26) mit dem Inneren des Rohrabschnittes (6) zu verbinden.

7. Kombination nach Anspruch 6 mit mehreren Rohrabschnitten (6), die jeweils in das Rohrleitungssystem eines Schiffes eingebaut sind, wobei die tragbare Einheit (18) mit jedem der Rohrabschnitte (6) verbindbar ist.

8. Verfahren zur Entnahme von Proben einer viskosen Flüssigkeit während der Verladung durch ein Rohr (2, 6) von einem Vorrat in mindestens einen Aufnahmebehälter an Bord eines Schiffes, bei dem eine tragbare Einheit (18) an dem Rohr lösbar befestigt wird, mittels der tragbaren Einheit (18) kleine Mengen mit bestimmtem Volumen aus der Strömung durch das Rohr (2, 6) während der Verladung abgepumpt und als Probe in mindestens einem an der tragbaren Einheit (18) befestigten Sammelbehälter (56) gesammelt werden, während der Verladevorgang fortschreitet.

9. Verfahren nach Anspruch 8, bei dem zusätzlich die Flüssigkeit vermischt wird, während sie das Rohr durchströmt, wobei die kleinen Mengen stromabwärts von dem Mischvorgang entnommen werden.

10. Verfahren nach Anspruch 8 oder 9, dadurch gekennzeichnet, daß die aus der Strömung entnommenen kleinen Mengen in mehrere getrennte Probenströme aufgeteilt werden und die jedem Probenstrom zugeteilten Mengen getrennt gesammelt werden, um im Laufe des Verladevorgangs mehrere ähnliche Proben zu bilden.

**Revendications**

1. Dispositif portable pour la prise d'échantillons d'un liquide visqueux pendant son chargement à travers un tuyau (2, 6) d'une alimentation à au moins un conteneur récepteur à bord d'un navire, ledit dispositif comprenant une structure portable pourvue d'au moins une pompe à déplacement positif (40), une gaine d'entrée (26) communiquant avec l'entrée de la pompe, au moins un connecteur (48) pour attacher un réceptacle collecteur d'échantillons (56) et connecté à la sortie de la pompe ou des pompes (40) et un moyen (66) pour entraîner la pompe ou les pompes:

le dispositif étant agencé de façon qu'au cours du refoulement, avec un réceptacle collecteur (56) attaché au ou à chaque connecteur (48) la pompe ou les pompes (40) servent à extraire des petites quantités d'un volume défini de l'écoulement à travers le tuyau (2, 6) et à les fournir au réceptacle ou aux réceptacles collecteurs (56) pour les y accumuler tandis que le refoulement se produit;

la ou chaque pompe (40), la gaine d'entrée (26) et le ou chaque connecteur (48) pour attacher un réceptacle de l'échantillon (56) et le moyen (66) pour entraîner la pompe ou les pompes, tous étant assemblés à la structure portable, de façon que ledit dispositif soit une unité portable (18) qui peut être connectée audit tuyau avec la gaine d'entrée (26) connectée à l'intérieur du tuyau (2, 6) pour la prise d'échantillons et qui peut être déconnectée du tuyau pour stockage de l'unité portable (18).

2. Dispositif selon la revendication 1, comprenant un temporisateur à retard (74) pour faire fonctionner ledit moyen d'entraînement (66) à des intervalles réguliers, ledit temporisateur étant assemblé à l'unité portable (18) et réglable pour faire varier la durée desdits intervalles.

3. Dispositif selon l'une quelconque des revendications précédentes, où l'unité portable (18) comprend un boîtier (20) enfermant au moins ladite pompe ou lesdites pompes (40) et le moyen (66) pour les entraîner, avec des commandes manuelles (74, 75, 76) prévues sur le boîtier (20).

4. Dispositif selon l'une quelconque des revendications précédentes, ayant un certain nombre de connecteurs (48), chacun pour attacher un réceptacle collecteur (56) séparé et l'agencement étant tel que, et utilisation, la pompe ou les pompes (40) refoulent le liquide retiré à chacun des connecteurs (48) de façon que des quantités de liquide retiré s'accumulent dans chaque réceptacle collecteur (56) tandis que le refoulement se passe.

5. Dispositif selon la revendication 4, ayant un certain nombre desdites pompes à déplacement positif (40) avec leurs entrées (39) connectées à une ou plusieurs desdites gaines d'entrée (26) avec la sortie (42) de chaque pompe (40) connectée à un connecteur (48) respectif, le dispositif ayant un seul moyen d'entraînement (66) activement connecté à toutes lesdites pompes (40), ainsi elles sont forcées à fonctionner à l'unisson.

6. En combinaison, un dispositif portable selon l'une quelconque des revendications précédentes et une section de tuyau (6) pour incorporation dans ledit tuyau (2) avec un mélangeur à pales statiques (11) dans la section de tuyau (6) pour mélanger le liquide le traversant, et une ouverture (9) dans la section de tuyau (6) en aval du mélangeur à pales (11) pour connexion de ladite gaine d'entrée (26) à l'intérieur de la section de tuyau (6).

7. Combinaison de la revendication 6 ayant un certain nombre desdites sections de tuyau (6) chacune étant incorporée dans une tuyauterie d'un navire et ladite unité portable (18) pour être connectée à l'une desdites sections de tuyau (6).

8. Procédé de prise d'échantillons d'un liquide visqueux pendant son chargement à travers un tuyau (2, 6) d'une alimentation à au moins un conteneur récepteur à bord d'un navire, le procédé consistant à attacher de manière détachable une unité portable (18) au tuyau, à pomper, au moyen de l'unité portable (18), des petites quantités d'un volume défini hors de l'écoulement à travers le tuyau (2, 6) pendant le cours du refoulement, et à accumuler celles-ci sous la forme d'un échantillon dans au moins un réceptacle collecteur (56) attaché à l'unité portable (18) tandis que le refoulement se passe.

9. Procédé selon la revendication 8, comprenant de plus l'étape de mélanger l'écoulement lors de son passage à travers le tuyau, lesdites petites quantités étant extraites en aval du mélange.

10. Procédé selon la revendication 8 ou la revendication 9, où les petites quantités extraites de l'écoulement sont distribuées entre un certain nombre de trajets séparés d'écoulement de l'échantillon, et les quantités distribuées à chaque trajet sont accumulées séparément pour produire une quantité identique d'échantillons, tandis que le refoulement se passe.

_FIG.1_

0 041 825

0 041 825

FIG. 2

FIG. 3

2

FIG. 4

0 041 825

_FIG.6_

_FIG.5_

_FIG.7_

_FIG.8_

4

FIG.9

0 041 825